# EUROPÄISCHE PATENTSCHRIFT

(11) **EP 2 691 704 B1**
(45) Veröffentlichungstag und Bekanntmachung des Hinweises auf die Patenterteilung: **07.03.2018**
(21) Anmeldenummer: 12723175.1
(22) Anmeldetag: 22.05.2012
(51) Int. Cl.: F24J 2/52

(54) **ANORDNUNG MIT BEFESTIGUNGSMODULEN ZUR BEFESTIGUNG VON SOLARMODULEN**
ARRANGEMENT WITH FASTENING MODULES FOR FASTENING SOLAR MODULES
AGENCEMENT AVEC MODULES DE FIXATION DESTINÉS À FIXER DES MODULES SOLAIRES

(30) Priorität: 03.06.2011 DE 102011105852; 26.07.2011 DE 102011052129
(43) Veröffentlichungstag der Anmeldung: 05.02.2014
(73) Patentinhaber: Habdank PV-Montagesysteme GmbH & Co. KG, 73037 Göppingen (DE)
(72) Erfinder: HABDANK, Martin, 73092 Heiningen (DE); HABDANK, Peter, 73092 Heiningen (DE); BAUMANN, Ralf, 73249 Wernau (DE)
(74) Vertreter: Ruckh, Rainer Gerhard
(86) Internationale Anmeldenummer: PCT/EP2012/059474
(87) Internationale Veröffentlichungsnummer: WO 2012/163728

(56) Entgegenhaltungen:
- EP-A1- 2 105 971
- EP-A1- 2 149 648
- WO-A2-2010/019742
- WO-A2-2010/140878
- WO-A2-2011/015186
- AU-A1- 2009 245 849
- DE-U1- 8 418 908
- DE-U1-202010 007 139
- DE-U1-202010 007 741
- DE-U1-202010 010 969
- DE-U1-202010 011 235
- FR-A1- 2 935 410
- FR-A1- 2 944 817
- FR-A1- 2 950 375
- JP-A- 2000 220 268
- JP-A- 2010 163 750

## Beschreibung

Die Erfindung betrifft eine Anordnung mit Befestigungsmodulen zur Befestigung von Solarmodulen.

Derartige Anordnungen bilden Montagesysteme und Tragkonstruktionen für Solarmodule, insbesondere Photovoltaik-Module, als Bestandteile von Solaranlagen. Die in Rede stehenden Befestigungssysteme dienen generell zur Befestigung der Solarmodule auf einer Dachkonstruktion, die insbesondere als Trapezblechdach ausgebildet ist. Alternativ kann die Dachkonstruktion als Wellblech-Dach ausgebildet sein. Weiter sind Dachkonstruktionen in Form von Sandwichdächern und dergleichen denkbar. Schließlich sind erfindungsgemäß die Befestigungssysteme für Fassaden einsetzbar.

Derartige Dachkonstruktionen, insbesondere Trapezblechdächer weisen stets eine bestimmte Dachneigung auf, so dass dementsprechend auch die Solarmodule auf einer solchen Dachkonstruktion eine geneigte Stellung aufweisen. Entsprechend der unterschiedlichen Ausrichtung der Solarmodule bezüglich dieser Neigungsrichtung können die Solarmodule quer oder hochkant auf der Dachkonstruktion montiert sein, wobei eine Dachkonstruktion in Form eines Trapezblechdachs selbst aus einer alternierenden Anordnung von Hochsicken und Tiefsicken besteht, deren Längsachsen in Neigungsrichtung des Trapezblechdachs verlaufen.

Aus dem Stand der Technik bekannte Befestigungssysteme für Solarmodule arbeiten mit Schienenstücken, die auf den Hochsicken des Trapezblechdachs befestigt werden. Nachteilig bei derartigen Systemen ist, dass die Befestigungssysteme für eine Hochkant-und Quermontage der Solarmodule unterschiedlich ausgestattet werden müssen, da bei der Quermontage im Gegensatz zur Hochkant-montage zusätzliche Tragschienen, Konturkonstruktionen und dergleichen vorgesehen werden müssen. Dies führt zu einem unerwünscht hohen Konstruktions- und Kostenaufwand des Befestigungssystems.

Die FR 2 935 410 A betrifft eine Anordnung zur Befestigung von Solarmodulen auf einer Dachkonstruktion. Diese Anordnung umfasst mehrere schienenförmige Träger, die auf in horizontaler Richtung verlaufenden Hochsicken einer Dachkonstruktion befestigt sind. Die Träger sind in Form von Profilen ausgebildet, die an ihren Oberseiten offen sind. Durch die offene Oberseite ist eine Schraube geführt, an welcher eine Klaue gelagert ist. Das in das Profil ragende Vorderende der Schraube greift in eine im Profil angeordnete Mutter, so dass die Schraube gegen ein Herauslösen aus dem Profil gesichert ist. Ein zu befestigendes Solarmodul liegt auf der eine Dachneigung aufweisenden Dachkonstruktion auf, wobei die Unterseite des Solarmoduls auf mehreren auf Hocksicken befestigten Trägern aufliegt. Mit den in den Trägern mittels der Schrauben gelagerten Klauen erfolgt eine Fixierung des Solarmoduls an seinen beiden seitlichen Rändern, die senkrecht zu dem oberen und unteren Rand des Solarmoduls angeordnet sind.

Die WO 2011/015186 A2 betrifft eine Endklemme zur Befestigung eines gerahmten PV-Moduls auf einem Tragprofil, mit einem Abschnitt zum Niederhalten des Rahmens des PV-Moduls auf eine Fläche des Tragprofils, einem Abschnitt zum seitlichen Festlegen des Rahmens, einem Abschnitt mit einer Öffnung zum Durchführungen einer Schraube und einem Abschnitt zum sich Abstützen auf derselben Fläche des Tragprofils, wobei der Abschnitt zum sich Abstützen einseitig und auf derjenigen Seite der Schraube angeordnet ist, die dem Abschnitt zum seitlichen Festlegen gegenüberliegt. Die Endklemme umfasst zwei Teile, die zusammen die vier Abschnitte enthalten und die parallel zu den Abschnitten zum Niederhalten und seitlichen Festlegen und in mehreren möglichen diskreten Stellungen, welche bestimmten zwischen der Fläche und dem Abschnitt zum Niederalten vorgesehenen Rahmenhöhen entsprechen, mit jeweils einem verbleibenden Freiheitsgrad und mit Spielpassung in den beiden anderen Freiheitsgraden ineinanderschiebbar sind, wofür eines der Teile eine Verzahnung mit einer Vielzahl entlang des verbleibenden Freiheitsgrades verlaufender Zahnelemente und das andere Teil eine hierzu korrespondierende Verzahnung mit mindestens einem Zahnelement trägt.

Die JP 2000220268 A betrifft eine Befestigungsstruktur zur Montage von Solarmodulen auf einem Dach. Die Solarmodule sind in Rahmen eingefasst. Zur Befestigung auf dem Dach sind obere und untere Klemmvorrichtungen vorgesehen. Die unteren Klemmvorrichtungen weisen Positionierteile zur Positionierung der Solarmodule auf.
Die FR 2 944 817 A1 betrifft eine Vorrichtung zur Befestigung von Solarmodulen auf einem Dach mit einer Dachschräge. Die Vorrichtung weist eine Profilstruktur auf, wobei Elemente von Profilen der Profilstruktur zum Halten der Solarmodule ausgebildet sind. In den Profilen können Einsetz-profile als Abführstruktur vorgesehen sein.
Die FR 2 950 375 A1 betrifft eine Dachanordnung umfassend Solarmodule, mit Befestigungselementen, Montageschienen und abnehmbaren Halteelementen.

Der Erfindung liegt die Aufgabe zugrunde, eine Anordnung der eingangs genannten Art bereitzustellen, welches mit möglichst geringem Aufwand eine Befestigung von Solarmodulen in unterschiedlichen Anordnungen auf einer Dachkonstruktion oder an einer Fassade ermöglicht.
Zur Lösung dieser Aufgabe sind die Merkmale des Anspruchs 1 vorgesehen. Vorteilhafte Ausführungsformen und zweckmäßige Weiterbildungen der Erfindung sind in den Unteransprüchen beschrieben.
Die erfindungsgemäße Anordnung umfasst eine eine Dachneigung aufweisende Dachkonstruktion oder eine Fassade, rechteckförmige Solarmodule sowie eine Anzahl von Befestigungsmodulen. Die Befestigungsmodule weisen als Komponenten eines Bausatzes jeweils einen Modulträger, welcher auf der Dachkonstruktion oder an der Fassade befestigbar ist, auf, sowie einen in dem Modulträger geführten Nutenstein, der mit einem Befestigungsmittel mit einer Modulklemme verbunden ist. Mittels derer ist das jeweilige Solarmodul klemmbar. Bei gleichbleibender Orientierung des auf der Dachkonstruktion oder Fassade befestigten Modulträgers kann die Modulklemme am Befestigungsmittel zwischen zwei Drehpositionen gedreht werden, so dass sowohl eine Hochkant- als auch eine Quer-Montage von Solarmodulen möglich ist. Bei einer Quer-Montage eines auf der Dachkonstruktion oder an der Fassade befestigten gerahmten Solarmoduls liegt die Modulklemme eines Befestigungsmoduls nur an der Oberseite des Solarmoduls an. Die Unterseite des Solarmoduls liegt auf einer Auflagefläche des jeweiligen Modulträgers auf. Die Befestigungsmodule sind am unteren und oberen Rand des Solarmoduls angeordnet. Der Nutenstein oder die Modulklemme der am unteren Rand des Solarmoduls angeordneten Befestigungsmodule bildet eine Abrutschsicherung für das Solarmodul. Bei einer Quer-Montage eines auf der Dachkonstruktion oder an der Fassade befestigten ungerahmten Solarmoduls liegt die Modulklemme eines Befestigungsmoduls an der Oberseite und an der Unterseite des Solarmoduls an. Senkrechte Stege eines Ober- und Unterteils der Modulklemme bilden eine Abrutschsicherung für das Solarmodul. Bei einer Quer-Montage eines Solarmoduls auf einer eine Dachneigung aufweisenden Dachkonstruktion oder an einer Fassade sind die Befestigungsmodule am unteren und oberen Rand des Solarmoduls angeordnet. Bei einer Hochkant-Montage eines Solarmoduls sind auf einer eine Dachneigung aufweisenden Dachkonstruktion oder an einer Fassade die Befestigungsmodule an den seitlichen Rändern des Solarmoduls angeordnet.

Dabei sind bei einer Hochkant-Montage die Modulklemme sowie das Distanzstück um 90° gegenüber deren Positionen bei der Quer-Montage gedreht.
Da mit denselben Befestigungsmodulen ohne Einsatz weiterer Bauteile sowohl eine Quer- als auch eine Hochkantmontage von Solarmodulen auf einer Dachkonstruktion oder an einer Fassade durchgeführt werden kann, ist das allein aus den Befestigungsmodulen bestehende Befestigungssystem universell einsetzbar und ermöglicht eine konstruktiv einfache und kostengünstige Befestigung von Solarmodulen.
Dieser Vorteil wird dadurch noch weiter verstärkt, dass die einzelnen Befestigungsmodule nur aus einer geringen Anzahl von Einzelbauteilen bestehen, die zudem einfach und schnell zum Befestigungsmodul zusammengebaut werden können.
Ein weiterer Vorteil der Erfindung besteht darin, dass die Komponenten eines Befestigungsmoduls einen Bausatz bilden, wobei durch unterschiedliche Ausbildungen von Komponenten des Befestigungsmoduls eine Montage unterschiedlicher Solarmodule ermöglicht wird.
Besonders vorteilhaft ist als weitere Komponente eines Befestigungsmoduls ein Distanzstück vorgesehen, welches mit dem Befestigungsmittel und der Modulklemme drehbar ist. Durch Verwendung unterschiedlich hoher Distanzstücke erfolgt eine Anpassung an Solarmodule mit unterschiedlichen Bauhöhen.

Mit der erfindungsgemäßen Anordnung können generell Solarmodule an verschiedenen Dachkonstruktionen oder Fassaden montiert werden. Ohne Beschränkung der Allgemeinheit wird im Folgenden auf eine Dachkonstruktion in Form eines Trapezblechdachs Bezug genommen.
Besonders vorteilhaft ist hierbei der Modulträger auf zwei aufeinander folgenden Hochsicken eines Trapezblechdachs befestigt. Der Modulträger weist eine schienenförmige Aufnahme auf, in welcher der Nutenstein verschiebbar gelagert ist. Der Nutenstein ist mittels einer Schraube mit der Modulklemme verbunden.

Der Modulträger ist so optimal an die Konstruktion des Trapezblechdachs angepasst und weist eine geringe Länge auf, da er nur auf zwei aufeinander folgenden Hochsicken aufsitzt. Der Nutenstein kann in dem Modulträger einfach in geeigneter Weise positioniert werden, um dann die Modulklemme in ihrer Sollposition am Solarmodul aufnehmen zu können. Ein wesentlicher Vorteil der Erfindung besteht darin, dass bei fester Anordnung der Modulträger auf den Hochsicken des Trapezdachs allein durch Drehen von Komponenten der Befestigungsmodule, insbesondere der am Befestigungsmittel gelagerten Modulklemme sowie gegebenenfalls dem Distanzstück eine Hochkant- und auch eine Quer-Montage von Solarmodulen bewerkstelligt werden kann.

Gemäß einer ersten Variante ist ein gerahmtes Solarmodul auf der Dachkonstruktion oder an der Fassade befestigt, wobei die Modulklemme eines Befestigungsmoduls nur an der Oberseite des Solarmoduls anliegt. Die Unterseite des Solarmoduls liegt auf einer Auflagefläche des jeweiligen Modulträgers auf.

In diesem Fall bildet der Nutenstein oder die Modulklemme eines am unteren Rand des Solarmoduls angeordneten Befestigungsmoduls eine Abrutschsicherung für das Solarmodul.

Dadurch wird eine weitere Sicherung für das Solarmodul erhalten.

Wesentlich hierbei ist, dass der Nutenstein über die Oberseite des Modulträgers hervorsteht.

Damit kann der über den Modulträger hervorstehende Teil des Nutensteins ein Anschlag für das Solarmodul und somit eine Abrutschsicherung bilden.

Alternativ kann mit der erfindungsgemäßen Anordnung ein ungerahmtes Solarmodul auf dem Trapezblechdach befestigt werden, wobei die Modulklemme eines Befestigungsmoduls an der Oberseite und an der Unterseite des Solarmoduls anliegt.
Da in diesem Fall die Modulklemmen direkt mit den aus Glaslaminat bestehenden Grenzflächen der Solarmodule in Kontakt kommen, ist zu deren Schutz vorgesehen, dass die Modulklemme ein Oberteil und ein Unterteil aufweist, welche jeweils ein elastisches Element zur Anlage an das Solarmodul aufweisen.
Die Erfindung wird im Folgenden anhand der Zeichnungen erläutert. Es zeigen:
- Figur 1a-1c:: Erste Ausführungsform von Komponenten eines Befestigungsmoduls für ein Befestigungssystem zur Befestigung von Solarmodulen auf einem Trapezblechdach.
- Figur 2a-2c:: Variante der Komponenten des Befestigungsmoduls gemäß den Figuren 1a-1c.
- Figur 3a:: Anordnung von Befestigungsmodulen gemäß den Figuren 1a-1c zur Quermontage eines gerahmten Solarmoduls auf einem Trapezblechdach.
- Figur 3b:: Schnittdarstellung der Anordnung gemäß Figur 3a.
- Figur 4:: Anordnung von Befestigungsmodulen gemäß den Figuren 1a-1c zur Hochkantmontage eines gerahmten Solarmoduls auf einem Trapezblechdach.
- Figur 5 :: Ausführungsform eines Befestigungsmoduls zur Montage von ungerahmten Solarmodulen auf einem Trapezblechdach.

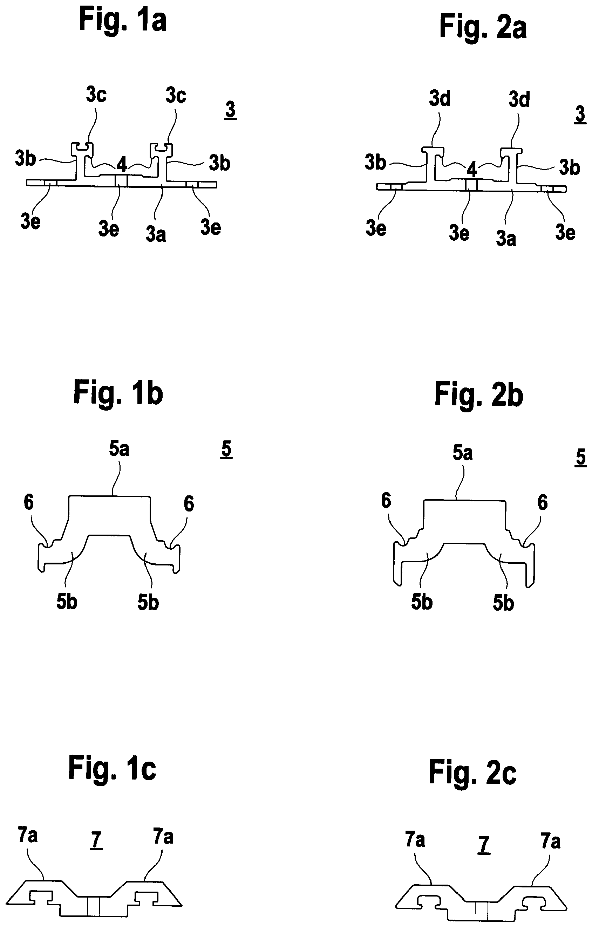

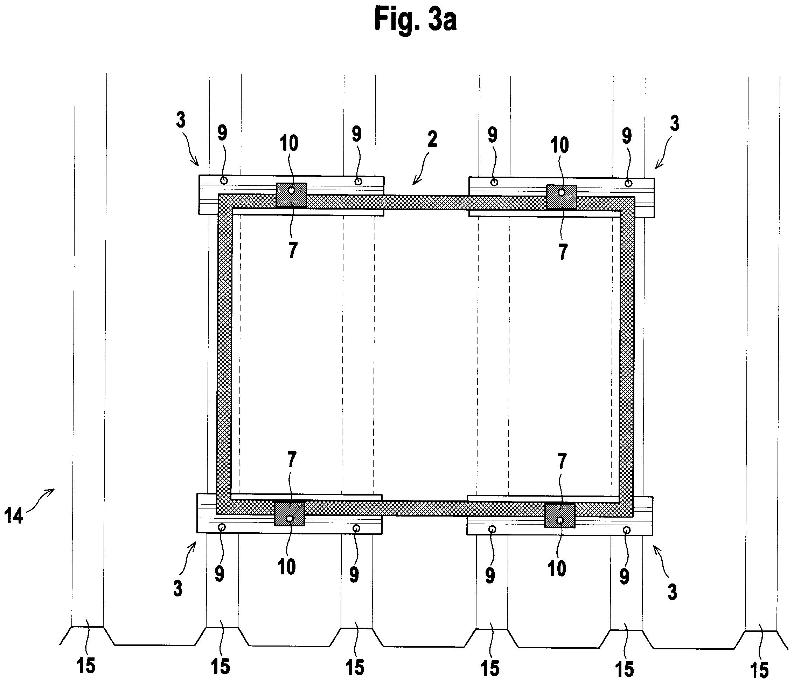

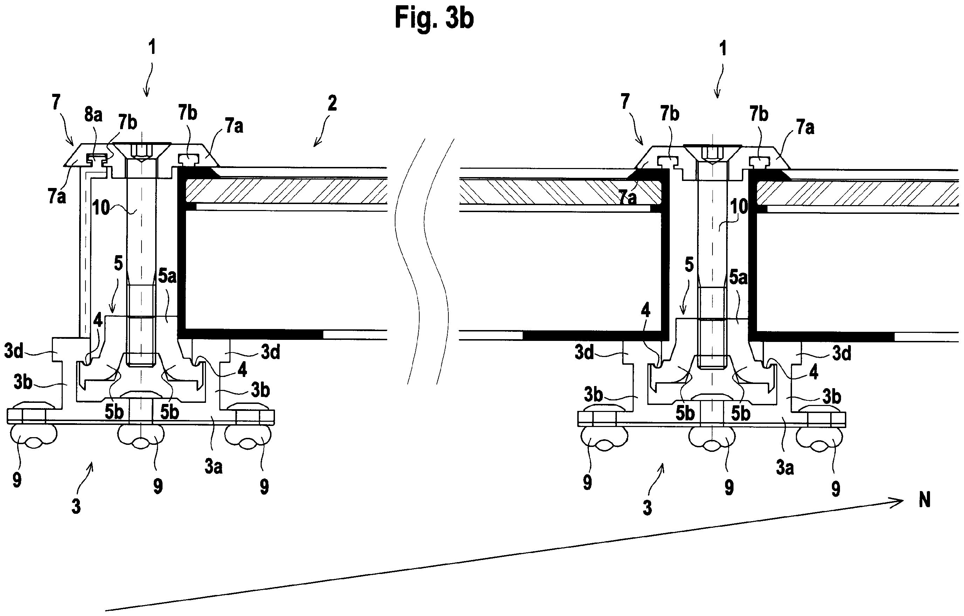

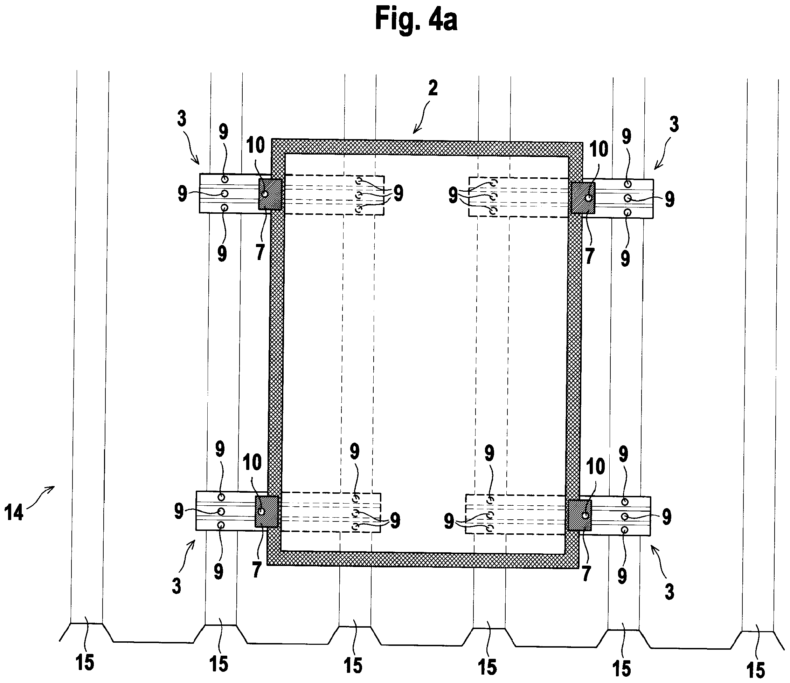

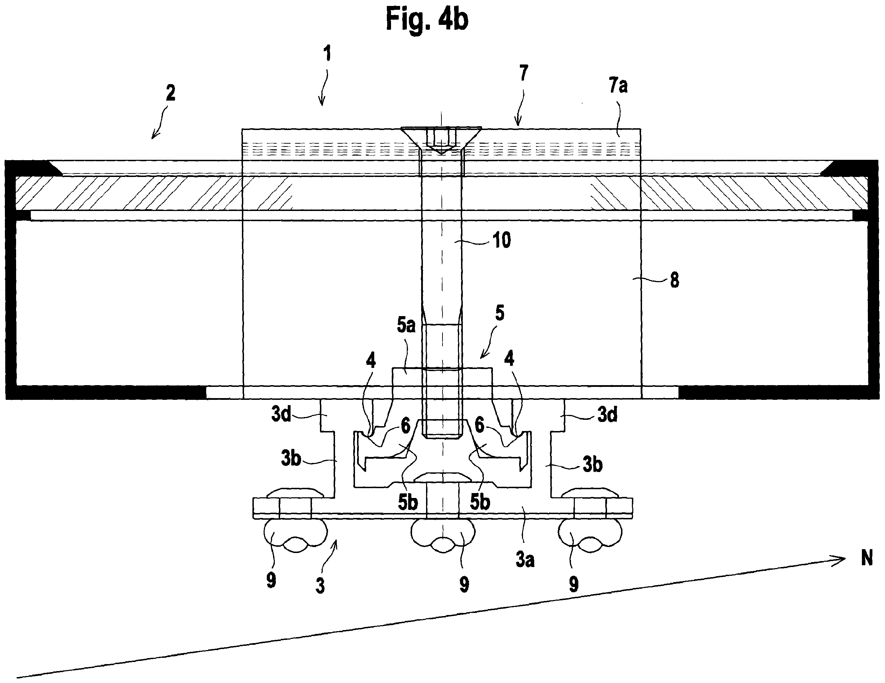

Die Figuren 1a-1c zeigen eine erste Ausführungsform der Komponenten von Befestigungsmodulen 1 für ein Befestigungssystem von Solarmodulen 2, insbesondere Photovoltaik-Modulen auf einem Trapezblechdach 14, welches eine Mehrfachanordnung von parallel verlaufenden Hochsicken 15 aufweist, das heißt einer Dachkonstruktion mit einem Trapezblech. Die Figuren 3 und 4 zeigen dabei Varianten eines mit einem solchen, von Befestigungsmodulen 1 gebildeten Befestigungssystem befestigten Solarmoduls 2.

Das Befestigungssystem besteht dabei allein aus einer Mehrzahl von derartigen Befestigungsmodulen 1, das heißt weitere Elemente zur Befestigung des Solarmoduls 2 auf dem Trapezblechdach 14 sind nicht erforderlich.

Als erste Komponente weist ein Befestigungsmodul 1 einen in Figur 1a dargestellten Modulträger 3 auf, wobei Figur 1a eine Querschnittsdarstellung des Modulträgers 3 zeigt. Der Modulträger 3 ist schienenförmig ausgebildet, wobei der Querschnitt über die gesamte Länge des Modulträgers 3 konstant ist. Der Modulträger 3 ist an die Struktur des Trapezblechdachs 14 angepasst, welches in bekannter Weise eine alternierende Folge von Hochsicken 15 und Tiefsicken aufweist, deren Längsachsen typisch in Neigungsrichtung des Trapezblechdachs 14 verlaufen. Die Länge des Modulträgers 3 ist so dimensioniert, dass dieser bei Aufbringen auf das Trapezblechdach 14 quer zu dessen Sicken genau auf zwei Hochsicken 15 aufsitzt, wie beispielsweise in Figur 3a darstellt.

Der Modulträger 3 weist ein Bodenteil 3a auf, in welchem drei Bohrungen 3e vorgesehen sind. In diese Bohrungen 3e können Befestigungsschrauben oder dergleichen eingeführt werden, um den Modulträger 3 auf dem Trapezblechdach 14 zu befestigen. Um eine Befestigung auf zwei Hochsicken 15 eines Trapezblechdachs 14 zu ermöglichen, ist eine weitere Reihe von drei Bohrungen 3e in den Modulträger 3 eingearbeitet. Jeweils eine Reihe von Bohrungen 3e dient dann zur Befestigung des Modulträgers 3 auf jeweils einer Hochsicke. Vom Bodenteil 3a des Modulträgers 3 stehen nach oben senkrecht zwei identisch ausgebildete Seitenteile 3b hervor. Die Seitenteile 3b sind einstückig mit dem Bodenteil 3a ausgebildet und verlaufen in Abstand parallel zueinander. Die oberen Ränder der Steilenteile sind im vorliegenden Fall als U-förmige Profilstücke 3c ausgebildet. An der inneren, unteren Kante jedes Profilstücks 3c ist ein nach unten hervorstehender Absatz 4 vorgesehen. Der Zwischenraum zwischen den beiden Seitenteilen 3b des Modulträgers 3 bildet eine Aufnahme für einen Nutenstein 5, dargestellt in Figur 1b, aus, welcher eine weitere Komponente des Befestigungsmoduls 1 bildet.

Der Nutenstein 5 ist in der Aufnahme verschiebbar gelagert und erfüllt die Funktion eines Klemm- und Abstandhalters. Der Nutenstein 5 weist einen massiven Grundkörper 5a auf, von welchem symmetrisch zu dessen Spiegelachsen schräg nach unten verlaufend Ansätze 5b ausmünden. An jeder Oberseite eines Ansatzes 5b befindet sich eine Nut 6, die nach Einsetzen des Nutensteins 5 in den Modulträger 3 in einen Absatz 4 eines der Profilstücke 3c des Modulträgers 3 eingreift, wodurch die Position des Nutensteins 5 in dem Modulträger 3 definiert ist. Die außenliegenden Seitenflächen der Ansätze 5b bilden Gleitflächen, mit denen der Nutenstein 5 verschiebbar an den Innenseiten der Seitenteile 3b des Modulträgers 3 anliegt. Der Grundkörper 5a des Nutensteins 5 steht über die Oberseite des Modulträgers 3 hervor.

Als weitere Komponente des Befestigungsmoduls 1 ist die in Figur 1c dargestellte Modulklemme 7 vorgesehen. Die Modulklemme 7 weist zwei symmetrisch zur Symmetrieachse der Modulklemme 7 ausgebildete Flügelarme 7a auf, wobei mit diesen zwei aneinander angrenzende Solarmodule 2 festgeklemmt werden können. Die Modulklemme 7 wird über ein in Figur 1c nicht dargestellten Befestigungsmittel mit dem Nutenstein 5 verbunden, das heißt der Nutenstein 5 erfüllt als weitere Funktion die Ankopplung der Modulklemmen 7 an dem Modulträger 3.

Die Figuren 2a-2c zeigen eine Variante der Ausführungsform der Komponenten des Befestigungsmoduls 1 der Figuren 1a-1c. Wie der Vergleich dieser Figuren zeigt, entspricht die Ausführung des Modulträgers 3 gemäß Figur 2a im Wesentlichen der Ausführungsform von Figur 1a. Der einzige Unterschied besteht darin, dass anstelle der Profilstücke 3c an den oberen Enden der Seitenteile 3b plattenförmige Vorsprünge 3d vorgesehen sind, wobei an den innenliegenden unteren Rändern die Absätze 4 vorgesehen sind. Bis auf geringfügige geometrische Abweichungen entspricht der Nutenstein 5 gemäß Figur 2b dem Nutenstein 5 gemäß Figur 1b. Ebenso entspricht die Modulklemme 7 gemäß Figur 2c der Modulklemme 7 gemäß Figur 1c.

Die Figuren 3a, 3b zeigen ein erstes Anwendungsbeispiel für die erfindungsgemäße Anordnung nämlich eine Quermontage von Solarmodulen 2 auf einem Trapezblechdach 14. Figur 3a zeigt die Montage eines Solarmoduls 2 auf dem Trapezblechdach 14. Bei diesem Ausführungsbeispiel umfasst das Befestigungssystem die Befestigungsmodule 1 gemäß den Figuren 2a bis 2c.
In Figur 3b sind zwei identisch ausgebildete Solarmodule 2 dargestellt, die mit Befestigungsmodulen 1 des Befestigungssystems auf dem Trapezblechdach 14 befestigt werden. Generell wird mit den Befestigungsmodulen 1 eine größere Anzahl von Solarmodulen 2 auf dem Trapezblechdach 14 befestigt. Die Solarmodule 2 sind im vorliegenden Fall als gerahmte Solarmodule 2 ausgebildet. Durch die Rahmung kommen die Befestigungsmodule 1 nicht direkt in Kontakt mit den aus Glaslaminat bestehenden Grenzflächen der Solarmodule 2. Die Neigungsrichtung des Trapezblechdachs 14 ist dort mit dem mit N bezeichneten Pfeil veranschaulicht.
Bei der in Figur 3b dargestellten Anordnung ist das linke Befestigungsmodul 1 an der unteren Längsseite des linken Solarmoduls 2 angeordnet, während das rechte Befestigungsmodul 1 an der oberen Längsseite des linken Solarmoduls 2 angeordnet ist und zugleich mit der unteren Längsseite des anschließenden rechten Solarmoduls 2 verbunden ist.
Wie aus Figur 3a ersichtlich, sitzen alle Modulträger 3 der Befestigungsmodule 1 auf Hochsicken 15 des Trapezblechdachs 14 auf und sind dort mit Befestigungsnieten 9 befestigt. Die Längen der Modulträger 3 sind so dimensioniert, dass diese immer genau auf zwei Hochsicken 15 aufsitzen. Anstelle von Nietverbindungen sind auch Schraubverbindungen zur Befestigung der Modulträger 3 auf dem Trapezblechdach 14 möglich.

In dem Modulträger 3 eines jeden Befestigungsmoduls 1 ist ein Nutenstein 5 geführt, der randseitig an den Innenseiten der Seitenteile 3b des Modulträgers 3 anliegt. Dabei greifen die Absätze 5 an den Profilstücken 3c der Seitenteile 3b des Modulträgers 3 in die Nuten 6 an den Ansätzen 5b des Nutensteins 5, wodurch dessen Ausrichtung im Modulträger 3 fixiert ist. Der Grundkörper 5a des Nutensteins 5 steht über die Oberseite des Modulträgers 3 hervor.

Wie insbesondere aus Figur 3b ersichtlich, ist zur Verbindung der Modulklemme 7 mit dem Nutenstein 5 eines Befestigungsmoduls 1 als Befestigungsmittel eine Schraube 10 vorgesehen. Die Schraube 10 durchsetzt dabei jeweils eine axiale Bohrung 3e in der Modulklemme 7 und in dem Nutenstein 5. Der Nutenstein 5 verfügt neben der Bohrung 3e über ein Schraubgewinde, das die Schraube 10 aufnimmt, wodurch eine Klemmung bewirkt wird. Der Kopf der Schraube 10 liegt an der Oberseite der Modulklemme 7 frei und ist somit für eine Bedienperson einfach zugänglich.

Als weitere Komponente eines Befestigungsmoduls 1 ist ein plattenförmiges Distanzstück 8 vorgesehen, welches als Abstandshalter zwischen dem Modulträger 3 und der Modulklemme 7 dient. Dieses Distanzstück 8 weist eine ebene Unterseite auf, die auf der ebenen Oberseite des Vorsprungs 3d des Modulträgers 3 aufsitzt. Am oberen Rand des Distanzstücks 8 ist ein T-förmiges Führungsstück 8a vorgesehen, welches in eine Aussparung 7b am Flügelarm 7a des Modulträgers 3 eingeschoben und geführt ist. Die Kontur der Aussparung 7b ist an die Kontur des Führungsstücks 8a angepasst. Durch eine Variation von Distanzstücken 8 unterschiedlicher Höhen kann eine Anpassung des Befestigungsmoduls 1 an Solarmodule 2 mit unterschiedlichen Bauhöhen, das heißt Dicken vorgenommen werden.

Das so ausgebildete Befestigungsmodul 1 fixiert das Solarmodul 2 an dessen Rand. Hierzu liegt die Modulklemme 7 von oben auf dem Solarmodul 2 auf, wobei die Auflagefläche hierfür von Distanzstücken 8 gebildet ist. Der untere Rand des Solarmoduls 2 liegt auf dem Vorsprung 3d des Seitenteils 3b des Modulträgers 3 auf. Weiterhin liegt die Seitenfläche des Solarmoduls 2 am Grundköper des Nutensteins 5 an, welcher über den Modulträger 3 hervorsteht. Dadurch bildet der Nutenstein 5 eines am unteren Rand des Solarmoduls 2 angeordneten Befestigungsmoduls 1 eine Abrutschsicherung für das Solarmodul 2.

Die Figuren 4a, 4b zeigen ein zweites Anwendungsbeispiel für die erfindungsgemäße Anordnung nämlich einer Hochkant-Montage eines Solarmoduls 2. Das in Figur 4a dargestellte Solarmodul 2 entspricht exakt dem Solarmodul 2 gemäß Figur 3a. Auch die Komponenten der Befestigungsmodule 1 des Befestigungssystems sind für die Anordnungen der Figuren 3a und 4a identisch. Insbesondere sind für die Anordnungen der Figuren 3a und 4b die Modulträger 3 der Befestigungsmodule 1 in identischer Weise auf dem Trapezblechdach 14 befestigt, nämlich derart, dass deren Längsachsen senkrecht zu den Hochsicken 15 des Trapezblechdachs 14 verlaufen. Dabei sitzt jeder Modulträger 3 auf zwei Hochsicken 15 auf.
Zum Wechsel von einer Quermontage des Solarmoduls 2 wie in Figur 3a dargestellt auf eine Hochkant-Montage wie in Figur 4a dargestellt, müssen lediglich die Nutensteine 5 in den Modulträgern 3 verschoben werden, um deren Abstände an die Schmalseite des Solarmoduls 2 anzupassen. Weiterhin werden die Modulklemmen 7 und Distanzstücke 8 bezüglich der Schraube 10 um 90° gegenüber den Ausrichtungen für die Quer-Montage gedreht, so dass die Modulklemmen 7 mit den Distanzstücken 8 nunmehr seitlich an dem Solarmodul 2 anliegen, wie in Figur 4a dargestellt.
Durch die 90°-Drehung verlaufen nun, wie aus den Figuren 4a und 4b ersichtlich, die Längsachsen der Modulklemmen 7 und der Distanzstücke 8 nicht mehr parallel sondern senkrecht zu den Längsachsen der jeweiligen Modulträger 3.
Wie insbesondere aus Figur 4b ersichtlich, sitzt nun die Unterseite des Distanzstücks 8 auf den Oberseiten beider Vorsprünge 3d des Modulträgers 3 auf. Das Solarmodul 2 ist dadurch fixiert, dass dessen Unterseite auf den Vorsprüngen 3d des Modulträgers 3 aufliegt. Ein Flügelarm 7a der Modulklemme 7 liegt auf der Oberseite des Solarmoduls 2 auf. Durch Anziehen der Schraube 10 wird das Solarmodul 2 zwischen den Vorsprüngen 3d des Modulträgers 3 und der Modulklemme 7 eingeklemmt und fixiert.
Da die Befestigungsmodule 1 bei der Hochkant-Montage gemäß den Figuren 4a, 4b seitlich am Solarmodul 2 anliegen, bilden diese Befestigungsmodule 1 keine Abrutschsicherungen für das Solarmodul 2.

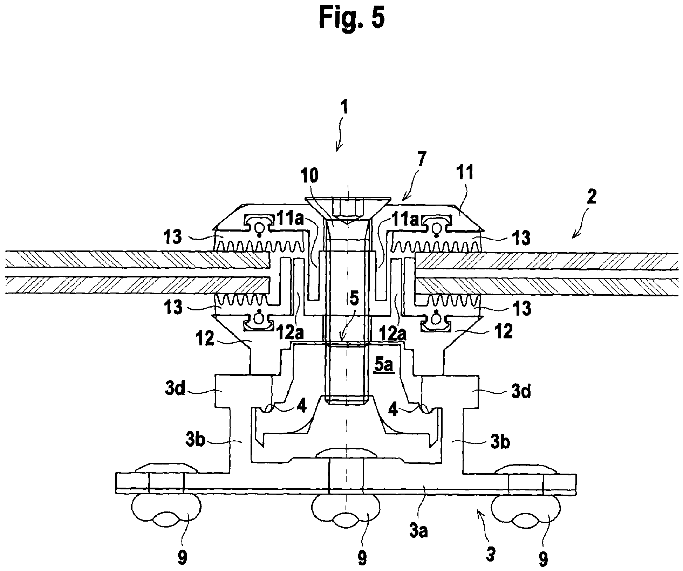

Figur 5 zeigt eine Ausführungsform eines Befestigungsmoduls 1 der erfindungsgemäßen Anordnung, mittels dessen ein ungerahmtes Solarmodul 2 auf einem Trapezblechdach 14 befestigt wird, das heißt in diesem Fall kommen Komponenten des Befestigungsmoduls 1 direkt in Kontakt mit den aus Glaslaminat bestehenden Grenzflächen des Solarmoduls 2. In Übereinstimmung mit der Anordnung gemäß den Figuren 3 und 4 weist auch das Befestigungsmodul 1 gemäß Figur 5 einen Modulträger 3, einen Nutenstein 5, eine Modulklemme 7, Befestigungsnieten 9 zur Befestigung des Modulträgers 3 auf dem Trapezblechdach 14 und eine Schraube 10 zur Verbindung des Nutensteins 5 mit der Modulklemme 7 auf. Der Modulträger 3 und der Nutenstein 5 entsprechen exakt der Ausführungsform der Figuren 2a und 2b.
Im Unterschied hierzu besteht die Modulklemme 7 im Beispiel gemäß Figur 5 aus zwei Teilen, nämlich einem Oberteil 11 und einem Unterteil 12. Das Ober- und Unterteil 11, 12 weist analog zur Modulklemme 7 der Figur 1c jeweils zwei Flügelteile auf, so dass ein Befestigungsmodul 1 an zwei Solarmodulen 2 montiert werden kann. Das Oberteil 11 und Unterteil 12 liegen zunächst lose aufeinander. Beide Elemente verfügen über eine Bohrung 3e, durch welche die Schraube 10 geführt ist, die in die Bohrung 3e mit Schraubgewinde des Nutensteins 5 greift. Die Klemmung von Oberteil 11 und Unterteil 12 erfolgt dadurch, dass die Schraube 10 in das Schraubgewinde des Nutensteins 5 eingedreht wird.

An den dem Solarmodul 2 zugewandten Grenzflächen des Ober- und Unterteils 11, 12 sind jeweils elastische Elemente in Form von EPDM-Dichtungen 13 angeordnet. Bei Anziehen der Schraube 10 werden die EPDM-Dichtungen 13 gegen die aus Glaslaminat bestehende Ober- und Unterseite des Solarmoduls 2 gepresst, wodurch das Solarmodul 2 lagefixiert wird. Durch die elastischen Eigenschaften der EPDM-Dichtungen 13 sind Beschädigungen des Solarmoduls 2 bei der Fixierung mit den Befestigungsmodulen 1 ausgeschlossen.

Bei einer Quermontage, wie in Figur 5 dargestellt, bilden senkrechte Stege 11a, 12a des Ober- und Unterteils 11, 12 der Modulklemme 7 Abrutschsicherungen für das Solarmodul 2, da in diesem Fall das Befestigungsmodul 1 an der Unterseite des Solarmoduls 2 anliegt. Diese senkrechten Stege 11a, 12a sind mit EPDM Schichten bezogen, so dass das Glaslaminat des Solarmoduls 2 nicht beschädigt wird.

Durch ein Verschieben der Nutensteine 5 in den Modulträgern 3 und ein anschließendes Drehen der Modulklemmen 7 um 90° kann, analog zu Ausführungsform der Figuren 4a, 4b, eine Hochkant-Montage eines Solarmoduls 2 realisiert werden, wobei bei dieser Hochkant-Montage die Befestigungsmodule 1 wieder seitlich am Solarmodul 2 anliegen.

### Bezugszeichenliste

- (1): Befestigungsmodul
- (2): Solarmodul
- (3): Modulträger
- (3a): Bodenteil
- (3b): Seitenteil
- (3c): Profilstück
- (3d): Vorsprung
- (3e): Bohrung
- (4): Absatz
- (5): Nutenstein
- (5a): Grundkörper
- (5b): Ansatz
- (6): Nut
- (7): Modulklemme
- (7a): Flügelarm
- (7b): Aussparung
- (8): Distanzstück
- (8a): Führungsstück
- (9): Befestigungsniete
- (10): Schraube
- (11): Oberteil
- (11a): Steg
- (12): Unterteil
- (12a): Steg
- (13): EPDM-Dichtung
- (14): Trapezblechdach
- (15): Hochsicke

## Patentansprüche

1. Anordnung umfassend eine eine Dachneigung aufweisende Dachkonstruktion oder eine Fassade, rechteckförmige Solarmodule (2) sowie eine Anzahl von Befestigungsmodulen (1), wobei die Befestigungsmodule (1) als Komponenten eines Bausatzes jeweils einen Modulträger (3), welcher auf der Dachkonstruktion oder an der Fassade befestigbar ist, aufweisen, sowie einen in dem Modulträger (3) geführten Nutenstein (5), der mit einem Befestigungsmittel mit einer Modulklemme (7) verbunden ist, mittels derer das jeweilige Solarmodul (2) klemmbar ist, **dadurch gekennzeichnet dass** bei gleichbleibender Orientierung des auf der Dachkonstruktion oder Fassade befestigten Modulträgers (3) die Modulklemme (7) am Befestigungsmittel zwischen zwei Drehpositionen gedreht werden kann, so dass sowohl eine Hochkant- als auch eine Quer-Montage von Solarmodulen (2) möglich ist, wobei bei einer Quer-Montage eines auf der Dachkonstruktion oder an der Fassade befestigten gerahmten Solarmoduls die Modulklemme (7) eines Befestigungsmoduls (1) nur an der Oberseite des Solarmoduls (2) anliegt, und die Unterseite des Solarmoduls (2) auf einer Auflagefläche des jeweiligen Modulträgers (3) aufliegt, wobei die Befestigungsmodule (1) am unteren und oberen Rand des Solarmoduls (2) angeordnet sind, und dabei der Nutenstein (5) oder die Modulklemme (7) der am unteren Rand des Solarmoduls (2) angeordneten Befestigungsmodule s (1) eine Abrutschsicherung für das Solarmodul (2) bildet, und wobei bei einer Quer-Montage eines auf der Dachkonstruktion oder an der Fassade befestigten ungerahmten Solarmoduls (2) die Modulklemme (7) eines Befestigungsmoduls (1) an der Oberseite und an der Unterseite des Solarmoduls (2) anliegt, und senkrechte Stege (11a, 12a) eines Ober- und Unterteils (11, 12) der Modulklemme (7) eine Abrutschsicherung für das Solarmodul (2) bilden.

2. Anordnung nach Anspruch 1, **dadurch gekennzeichnet, dass** als weitere Komponente eines Befestigungsmoduls (1) ein Distanzstück (8) vorgesehen ist, welches mit der Modulklemme (7) drehbar ist.

3. Anordnung nach Anspruch 2, **dadurch gekennzeichnet, dass** durch Verwendung unterschiedlich hoher Distanzstücke (8) eine Anpassung an Solarmodule (2) mit unterschiedlichen Bauhöhen erfolgt.

4. Anordnung nach einem der Ansprüche 1 bis 3, **dadurch gekennzeichnet, dass** bei einer Quer-Montage eines Solarmoduls (2) auf einer eine Dachneigung aufweisenden Dachkonstruktion oder an einer Fassade die Befestigungsmodule (1) am unteren und oberen Rand des Solarmoduls (2) angeordnet sind.

5. Anordnung nach einem der Ansprüche 1 bis 3, **dadurch gekennzeichnet, dass** bei einer Hochkant-Montage eines Solarmoduls (2) auf einer eine Dachneigung aufweisenden Dachkonstruktion oder an einer Fassade die Befestigungsmodule (1) an den seitlichen Rändern des Solarmoduls (2) angeordnet sind.

6. Anordnung nach Anspruch 5, **dadurch gekennzeichnet, dass** bei einer Hochkant-Montage die Modulklemme (7) sowie das Distanzstück (8) um 90° gegenüber deren Positionen bei der Quer-Montage gedreht sind.

7. Anordnung nach einem der Ansprüche 1 bis 6, **dadurch gekennzeichnet, dass** die Dachkonstruktion als Trapezblechdach ausgebildet ist, wobei jeder Modulträger (3) auf zwei aufeinander folgenden Hochsicken (15) des Trapezblechdachs (14) befestigt ist.

8. Anordnung nach einem der Ansprüche 1 bis 7, **dadurch gekennzeichnet, dass** jeder Modulträger (3) eine schienenförmige Aufnahme aufweist, in welcher der Nutenstein (5) verschiebbar gelagert ist.

9. Anordnung nach einem der Ansprüche 1 bis 8, **dadurch gekennzeichnet, dass** der Nutenstein (5) über die Oberseite des Modulträgers (3) hervorsteht.

10. Anordnung nach einem der Ansprüche 1 bis 9, **dadurch gekennzeichnet, dass** das Befestigungsmittel zur Verbindung der Modulklemme (7) mit dem Nutenstein (5) eine Schraube (10) ist.

11. Anordnung nach einem der Ansprüche 1 bis 10, **dadurch gekennzeichnet, dass** die Modulklemme (7) ein Oberteil (11) und ein Unterteil (12) aufweist, welche jeweils ein elastisches Element zur Anlage an das Solarmodul (2) aufweisen.

## Claims

1. Arrangement comprising a roof construction, which has a roof inclination, or a facade, rectangular solar modules (2) and a plurality of securing modules (1), wherein the securing modules (1) as components of a construction set each comprise a module support (3), which is securable on the roof construction or to the facade, and a groove block (5), which is guided in the module support (3) and which is connected by securing means with a module clamp (7) by way of which the respective solar module (2) can be clamped, **characterised in that** in the case of identical orientation of the module support (3) secured on the roof construction or facade the module clamp (7) can be rotated at the securing means between two rotational positions so that not only an on-edge mounting, but also a transverse mounting of solar modules (2) are possible, wherein for transverse mounting of a framed solar module secured on the roof construction or to the facade the module clamp (7) of a securing module (1) bears only against the upper side of the solar module (2) and the lower side of the solar module (2) rests on a support surface of the respective module support (3), wherein the securing modules (1) are arranged at the lower and upper edges of the solar module (2) and **in that** case the groove block (5) or the module clamp (7) of the securing module (1) arranged at the lower edge of the solar module (2) forms anti-slip securing means for the solar module (2), and wherein for transverse mounting of an unframed solar module (2) secured on the roof construction or to the facade the module clamp (7) of a securing module (1) bears against the upper side and the lower side of the solar module (2) and vertical webs (11a, 12a) of an upper part (11) and lower part (12) of the module clamp (7) form anti-slip securing means for the solar module (2).

2. Arrangement according to claim 1, **characterised in that** a spacer (8) which is rotatable together with the module clamp (7) is provided as a further component of a securing module (1).

3. Arrangement according to claim 2, **characterised in that** adaptation to solar modules (2) with different constructional heights is carried out by use of spacers (8) of different heights.

4. Arrangement according to any one of claims 1 to 3, **characterised in that** for transverse mounting of a solar module (2) on a roof construction, which has a rood inclination, or to a facade the securing modules (1) are arranged at the lower edge and upper edge of the solar module (2).

5. Arrangement according to any one of claims 1 to 3, **characterised in that** for on-edge mounting of a solar module (2) on a roof construction, which has a roof inclination, or at a facade the securing modules (1) are arranged at the lateral edges of the solar module (2).

6. Arrangement according to claim 5, **characterised in that** for on-edge mounting the module clamp (7) and the spacer (8) are rotated through 90° relative to the positions thereof for transverse mounting.

7. Arrangement according to any one of claims 1 to 6, **characterised in that** the roof construction is constructed as a trapezoidally corrugated sheet roof, wherein each module support (3) is secured on two successive raised beads of the trapezoidally corrugated sheet roof (14).

8. Arrangement according to any one of claims 1 to 7, **characterised in that** each module support (3) comprises a rail-shaped mount in which the groove block (5) is mounted to be displaceable.

9. Arrangement according to any one of claims 1 to 8, **characterised in that** the groove block (5) protrudes beyond the upper side of the module support (3).

10. Arrangement according to any one of claims 1 to 9, **characterised in that** the securing means for connection of the module clamp (7) with the groove block (5) is a screw (10).

11. Arrangement according to any one of claims 1 to 10, **characterised in that** the module clamp (7) comprises an upper part (11) and a lower part (12), which each comprise a resilient element for contact with the solar module (2).

## Revendications

1. Arrangement comprenant une toiture présentant une pente de toit ou une façade, des modules solaires rectangulaires (2) ainsi qu'un certain nombre de modules de fixation (1), dans lequel les modules de fixation (1) présentent, en tant que composants d'un kit de construction, chacun un support de module (3) qui peut être fixé sur la toiture ou sur la façade ainsi qu'un coulisseau (5) qui est guidé dans le support de module (3) et qui est relié par un moyen de fixation à une bride de module (7) à l'aide de laquelle le module solaire (2) concerné peut être serré,
**caractérisé en ce**
**que**, l'orientation du support de module (3) fixé sur la toiture ou la façade restant inchangée, la bride de module (7) peut être tournée dans deux positions de rotation sur le moyen de fixation, de sorte que les modules solaires (2) peuvent être montés aussi bien à la verticale qu'à l'horizontale, étant précisé que dans le cas d'un montage à l'horizontale d'un module solaire encadré fixé sur la toiture ou sur la façade, la bride de module (7) d'un module de fixation (1) ne s'applique que sur la face supérieure du module solaire (2) et la face inférieure du module solaire (2) repose sur une surface d'appui du support de module (3) concerné, les modules de fixation (1) étant disposés sur les bords inférieur et supérieur du module solaire (2) et le coulisseau (5) ou la bride de module (7) des modules de fixation (1) disposés sur le bord inférieur du module solaire (2) formant une sécurité anti-glissement pour le module solaire (2), et que dans le cas d'un montage à l'horizontale d'un module solaire (2) non encadré fixé sur la toiture ou sur la façade, la bride de module (7) d'un module de fixation (1) s'applique sur le bord supérieur et sur le bord inférieur du module solaire (2) et des entretoises perpendiculaires (11a, 12a) d'une partie supérieure et inférieure (11, 12) de la bride de module (7) forment une sécurité anti-glissement pour le module solaire (2).

2. Arrangement selon la revendication 1, **caractérisé en ce qu'**une pièce d'écartement (8), pouvant tourner avec la bride de module (7), est prévue en tant qu'autre composant d'un module de fixation (1).

3. Arrangement selon la revendication 2, **caractérisé en ce que** l'utilisation de pièces d'écartement (8) de différentes hauteurs permet une adaptation à des modules solaires (2) de différentes hauteurs de construction.

4. Arrangement selon l'une des revendications 1 à 3, **caractérisé en ce que** dans le cas d'un montage à l'horizontale d'un module solaire (2) sur une toiture présentant une pente de toit ou sur une façade, les modules de fixation (1) sont disposés sur les bords inférieur et supérieur du module solaire (2).

5. Arrangement selon l'une des revendications 1 à 3, **caractérisé en ce que** dans le cas d'un montage à la verticale d'un module solaire (2) sur une toiture présentant une pente de toit ou sur une façade, les modules de fixation (1) sont disposés sur les bords latéraux du module solaire (2).

6. Arrangement selon la revendication 5, **caractérisé en ce que** dans le cas d'un montage à la verticale, la bride de module (7) et la pièce d'écartement (8) sont tournées de 90° par rapport à leurs positions dans le cas du montage à l'horizontale.

7. Arrangement selon l'une des revendications 1 à 6, **caractérisé en ce que** la toiture est réalisée sous la forme d'un toit en tôle trapézoïdale, chaque support de module (3) étant fixé sur deux sommets d'onde (15) successifs du toit en tôle trapézoïdale (14).

8. Arrangement selon l'une des revendications 1 à 7, **caractérisé en ce que** chaque support de module (3) présente un logement en forme de rail dans lequel le coulisseau (5) est monté coulissant.

9. Arrangement selon l'une des revendications 1 à 8, **caractérisé en ce que** le coulisseau (5) fait saillie de la face supérieure du support de module (3).

10. Arrangement selon l'une des revendications 1 à 9, **caractérisé en ce que** le moyen de fixation servant à relier la bride de module (7) au coulisseau (5) est une vis (10).

11. Arrangement selon l'une des revendications 1 à 10, **caractérisé en ce que** la bride de module (7) présente une partie supérieure (11) et une partie inférieure (12) qui présentent chacune un élément élastique destiné à être appliqué sur le module solaire (2).
